# FASCICULE DE BREVET EUROPEEN

(11) **EP 3 020 577 B1**
(45) Date de publication et mention de la délivrance du brevet: **03.05.2017**
(21) Numéro de dépôt: 15003250.6
(22) Date de dépôt: 16.11.2015
(51) Int. Cl.: B60C 23/04, B29D 30/00

(54) **DISPOSITIF DE FIXATION D'UN BOITIER ÉLECTRONIQUE DANS LA ROUE D'UN VÉHICULE**
VORRICHTUNG ZUR BEFESTIGUNG EINES ELEKTRONISCHEN GEHÄUSES IM RAD EINES FAHRZEUGS
DEVICE FOR SECURING AN ELECTRONIC HOUSING IN THE WHEEL OF A VEHICLE

(30) Priorité: 17.11.2014 FR 1461047
(43) Date de publication de la demande: 18.05.2016
(73) Titulaire: LDL Technology, 31520 Ramonville Saint Agne (FR)
(72) Inventeur: Luce, Dominique, FR-31210 Bordes-de-Rivière (FR)
(74) Mandataire: Richebourg, Michel François

(56) Documents cités:
- WO-A1-2013/153088
- WO-A1-2014/027067
- US-A1- 2012 160 409
- US-A1- 2013 125 640

## Description

### DOMAINE D'APPLICATION DE L'INVENTION

La présente invention a trait au domaine de la détection de paramètres à l'intérieur des roues d'un véhicule et notamment aux adaptations permettant de fixer un boîtier de détection à l'intérieur d'une roue et plus particulièrement à la paroi interne du pneumatique de la roue.

### DESCRIPTION DE L'ART ANTÉRIEUR

Il existe une pluralité de solutions de fixation des boîtiers électroniques contenant les capteurs de mesure de paramètres telles la température et la pression à l'intérieur d'un pneumatique d'une roue.

Les solutions de fixation existantes consistent à fixer le boîtier aux parois internes du pneumatique et/ou à orienter les orifices de prises de mesure comme décrit dans les documents FR2899150, DE102007010782, WO2004/002758, WO2013/153088, US2013/0125640 et WO2014/027067.

Une telle solution présente néanmoins plusieurs inconvénients, dont les suivants :
- la proximité du boîtier avec la bande de roulement du pneumatique le soumet aux mêmes chocs, changements de températures et déformations (telle la pliure) que ceux subis selon un large spectre de fréquences par le pneumatique,
- l'échange thermique du à cette proximité est dommageable pour la durée de vie du boîtier électronique et de ses composants,
- la force centrifuge tend à maintenir en position le capteur mais également à orienter vers l'extérieur toute matière contenue dans le pneumatique tendant alors à obstruer les orifices du ou des capteurs,
- lorsque la force centrifuge ne maintient pas suffisamment le boîtier, ce dernier peut être éjecté du logement dans lequel il a été placé par exemple lors du passage du pneumatique sur un angle de trottoir à basse vitesse.

Plus récemment, la demanderesse a décrit dans le document EP 2641756, un dispositif de fixation d'un boîtier de prise de mesure sur la paroi interne d'un pneumatique remarquable en ce qu'il comprenait au moins un élément d'entretoisement interposé entre le boîtier et ladite paroi interne de façon à créer un espace entre le boîtier et ladite paroi interne. Cet espace permettait de créer une zone intermédiaire évitant ou atténuant la transmission des chocs et thermique. En outre, il donnait la possibilité d'orienter le boîtier de sorte que l'orifice de prise de mesure donnant accès au capteur soit ouvert entre ledit boîtier et la face interne de la bande de roulement du pneumatique de sorte que la matière contenue dans le pneumatique projetée par la force centrifuge ne vienne pas obstruer les orifices du ou des capteurs.

La demanderesse a néanmoins constaté que la fixation à l'origine de l'entretoise, pouvait être améliorée.

### DESCRIPTION DE L'INVENTION

La demanderesse a donc mené des recherches visant à améliorer la fixation d'un boîtier électronique de prise de mesure en conservant les avantages d'une bonne orientation du boîtier.

Ces recherches ont abouti à la conception et à la réalisation d'un dispositif de fixation à la paroi interne d'un pneumatique d'un boîtier électronique de mesure de paramètres à l'intérieur du pneumatique,
ledit boîtier étant préformé d'un orifice faisant communiquer son volume intérieur avec le volume intérieur du pneumatique,
le dispositif comprenant ledit boîtier et un réceptacle souple qui venant se fixer à ladite paroi interne par un moyen d'adhésion, est préformé pour accueillir et retenir ledit boîtier,
ledit réceptacle souple formant un compartiment équipé d'une ouverture, par laquelle est introduit ledit boîtier et qui est bordée par un rebord s'étendant extérieurement et proposant une surface de contact pour le moyen d'adhésion, de sorte qu'une fois le réceptacle fixé, ladite ouverture est fermée par la paroi interne sur laquelle le réceptacle est fixé,
ladite ouverture étant équipée d'un autre rebord dit rebord interne qui, s'étendant intérieurement, crée un rétrécissement à des fins de retenue du boîtier dans ledit compartiment et un entretoisement définissant un espace entre le boîtier et la paroi interne du pneumatique.

Selon l'invention, le dispositif est remarquable en ce que ledit boîtier est orienté dans ledit compartiment de sorte que son orifice s'ouvre sur ledit espace et ledit boîtier et/ou ledit réceptacle sont préformés de passages faisant communiquer l'espace créé à l'intérieur du compartiment, et l'intérieur du pneumatique.

Cette caractéristique est particulièrement avantageuse en ce qu'elle prévoit un réceptacle qui doit accueillir le boîtier avant fixation et dont l'ouverture est fermée par la paroi sur laquelle le réceptacle vient se coller. Il n'y a alors plus de risque d'une éjection du boîtier conformément aux objectifs de l'invention.

L'espace défini évite un contact direct du boîtier contre la paroi interne ce qui permet d'isoler ledit boîtier d'une part et de préserver la couche étanche intérieure du pneumatique d'autre part.

En outre, comme ledit boîtier est orienté dans ledit compartiment de sorte que son orifice s'ouvre sur ledit espace, l'orifice ménagé dans le boîtier n'est pas soumis aux projections que la force centrifuge est susceptible de créer et est lui-même protégé par les parois du compartiment. Selon un mode de réalisation préféré mais non limitatif, le dispositif est fixé sur la face interne de la bande de roulement du pneumatique.

Cette orientation du boîtier requiert néanmoins des caractéristiques pour permettre la prise de mesure dans de bonnes conditions. Ainsi, pour ce faire, ledit boîtier et/ou ledit réceptacle sont préformés de passages.

Selon une autre caractéristique, les parois du compartiment sont percées par au moins un trou. Selon un mode de réalisation préféré, lesdites parois sont percées par une pluralité de trous.

Ledit boîtier est lui-même préformé d'au moins une projection venant coopérer avec ledit trou en s'y logeant afin de diminuer la surface des points de contact entre le boîtier et le compartiment et éviter que les contraintes thermiques ou physiques transmises par le pneumatique au compartiment ne se reportent sur le boîtier. Ainsi, bien que le réceptacle soit déformable, ses parois internes sont ajustées au corps du boîtier et coopèrent au moyen de cette liaison projections/trous.

Selon un mode de réalisation préféré, ledit boîtier est préformé d'une pluralité de projections venant coopérer avec une pluralité de trous percés dans lesdites parois du compartiment. Soumis indirectement aux contraintes et chocs, le boîtier va se déplacer et évacuer l'énergie du choc de manière cinétique puis transfère cette énergie au réceptacle dont la nature souple élastique assure la dispersion de l'énergie initiale du choc. Cette liaison permet de réduire les déplacements du boîtier tout en autorisant le passage de l'air pour la mesure de la pression et de la température du pneumatique. Ces trous ont pour autres fonctions de permettre à l'eau ou autres savons liquides de s'échapper du réceptacle et de ne pas rester accumulés par capillarité sur l'orifice dont est ménagé le boîtier à des fins de prise de pression.

Selon une autre caractéristique particulièrement avantageuse, ledit boîtier est préformé de projections venant en appui sur le rebord interne de l'ouverture du compartiment. Ces projections diminuent la surface des points de contact et permettent de créer un espace entre la surface du rebord interne et la surface du boîtier, espace où l'air peut circuler.

Pour faciliter cette circulation, ledit boîtier et/ou ledit réceptacle sont préformés de passages faisant communiquer l'espace créé à l'intérieur du compartiment, et l'intérieur du pneumatique à la fois pour permettre la bonne prise de mesure mais également pour faciliter l'évacuation. Selon une caractéristique particulièrement avantageuse, ledit boîtier est préformé extérieurement de gorges dans lesquelles communique ledit orifice préformé dans le boîtier. Les parois du compartiment sont préformées d'orifices communiquant avec lesdites gorges garantissant que l'orifice du boîtier communique avec le volume intérieur du pneumatique. De plus, ces gorges et ces orifices venant en correspondance vont faciliter l'évacuation de toute matière susceptible de s'être introduite entre le boîtier et ladite paroi interne.

La fonction de circulation de l'air est ainsi associée à la fonction d'évacuation hors du compartiment des fluides piégés dans le pneumatique, tels de l'eau, du savon de montage, du liquide anti-crevaison, etc...

Ledit boîtier et ledit réceptacle adoptent une forme oblongue et sont disposés sur la paroi interne de la bande de roulement du pneumatique de façon à ce que la plus grande longueur soit positionnée sur la largeur du pneumatique. Une telle disposition contribue également à la protection du boîtier et du réceptacle contre les déformations subies par le pneumatique. En outre, une telle forme évite toute agression des parois internes du réceptacle en proposant un volume sans arêtes saillantes.

Selon un mode de réalisation préféré, le réceptacle est réalisé dans un matériau souple élastique tel du caoutchouc. La mise en place du boîtier se fait par étirement de la périphérie de l'ouverture. Le boîtier est alors maintenu, il est en compression légère et n'est pas en contact direct avec le pneumatique.

Ce réceptacle est suffisamment déformable pour éviter que les chocs et contraintes auxquels le pneumatique est soumis ne soient transmis au boîtier et au capteur qu'il contient.

Le moyen d'adhésion peut être mécanique, chimique ou moléculaire.

Selon une autre caractéristique particulièrement avantageuse, le boîtier est réalisé par surmoulage de ses composants dans une résine permettant ainsi la réalisation d'une même forme tout en autorisant le surmoulage de différents types de composants telles les batteries qui peuvent différer selon le besoin du client.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est un dessin schématique d'une vue de face en coupe d'un pneumatique équipé d'un mode de réalisation du dispositif de l'invention;
La figure 2 est un dessin schématique d'une vue de côté en coupe partielle du pneumatique de la figure 1;
La figure 3 est un dessin schématique d'une vue de face en coupe d'un mode de réalisation du dispositif conforme à l'invention;
Les figures 4 et 5 sont des dessins schématiques de vues en perspective de dessus et de dessous du réceptacle seul;
Les figures 6 et 7 sont des dessins schématiques de vues en perspective de dessus et de dessous du boîtier seul.

### DESCRIPTION D'UN MODE PRÉFÉRÉ DE RÉALISATION

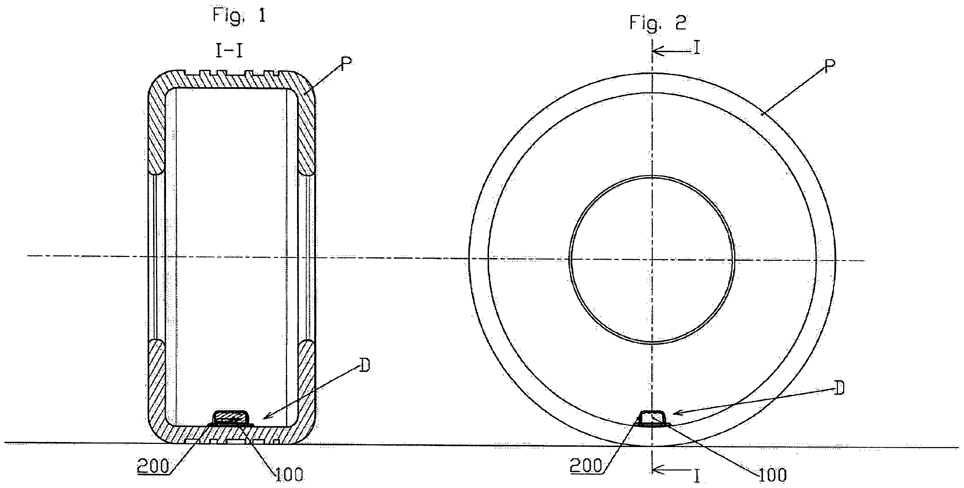

Comme illustré sur les dessins des figures 1 et 2, le pneumatique P est équipé sur la face interne de sa bande de roulement d'un dispositif de fixation référencé D dans son ensemble.

Ce dispositif D associe un boîtier 100 à un réceptacle souple présentant les caractéristiques suivantes :
- le boîtier 100 contient les différents composants électroniques nécessaires à la prise de mesure de température et/ou de pression à l'intérieur d'un pneumatique et à la communication desdites mesures,
- le réceptacle souple 200 vient se coller à ladite face interne par un moyen de collage 300 et est préformé pour accueillir et retenir ledit boîtier 100.

Selon un mode de réalisation non limitatif, le réceptacle 200 est réalisé dans la même matière caoutchoutée que celle du pneumatique P. Ainsi, selon un mode de réalisation envisagé, ce réceptacle 200 est vulcanisé par le manufacturier du pneumatique P.

Selon le mode de réalisation préféré mais non limitatif illustré, le moyen de collage 300 est ici formé par un module double-face acrylique préfixé sur le réceptacle 200 avant introduction du boîtier dans le compartiment 210..

Selon un autre mode de réalisation non limitatif, le réceptacle est encollé (comme pour une vulcanisation à froid).

Selon un autre mode de réalisation non limitatif, le moyen d'adhésion consiste en un module de fixation par micro-ventouses préformé dans le réceptacle ou disposé entre le réceptacle et la paroi de pneumatique.

Ledit boîtier 100 et ledit réceptacle 200 adoptent une forme oblongue et sont disposés sur la paroi interne de la bande de roulement du pneumatique de façon à ce que la plus grande longueur soit disposée dans la largeur du pneumatique P de sorte que lors de la formation d'un pli sur le pneumatique, le boîtier n'est que très peu soumis à un effort de flexion.

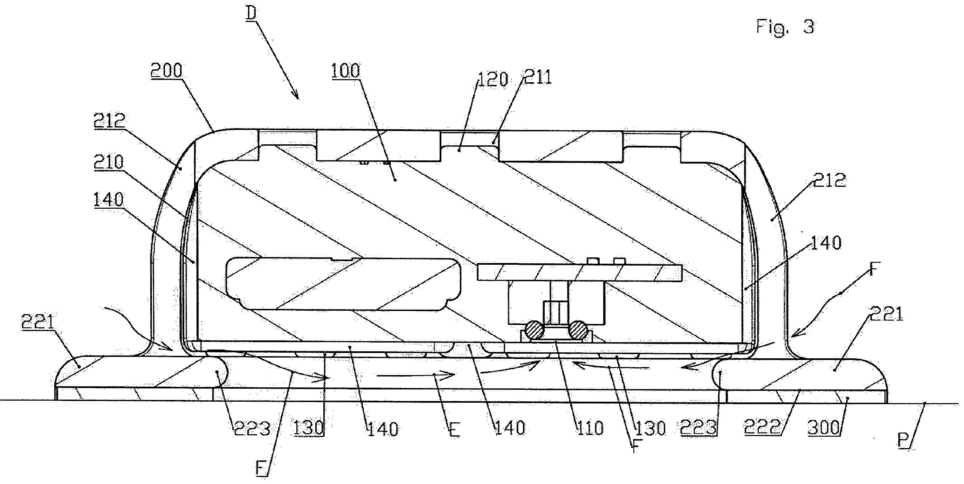

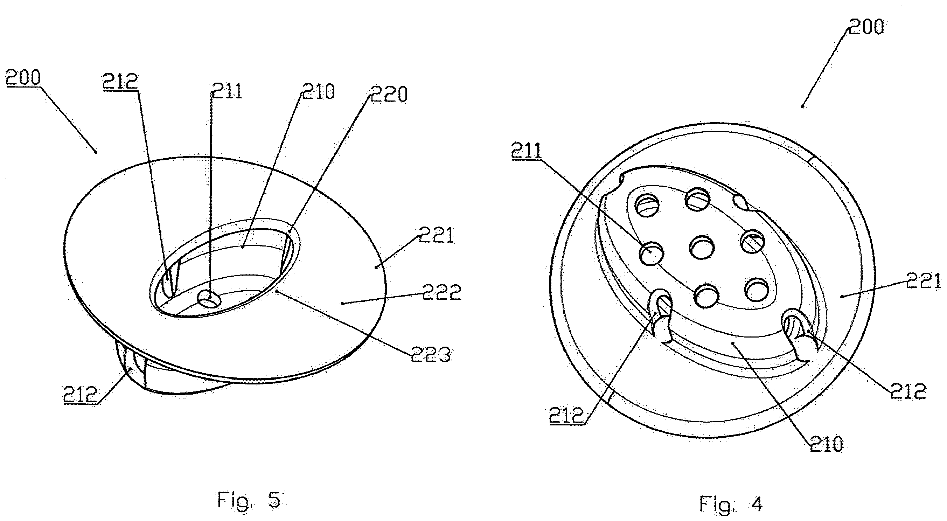

Comme illustré par les dessins des figures 3, 4 et 5, ledit réceptacle souple 200 forme un compartiment d'accueil 210 équipé d'une ouverture 220, par laquelle est introduit ledit boîtier 100 et qui est bordée par un rebord périphérique 221 s'étendant extérieurement et proposant une surface de contact 222 avec le moyen de collage 300 de sorte qu'une fois le réceptacle collé, ladite ouverture 220 est fermée par la paroi interne du pneumatique P sur laquelle le réceptacle 200 est collé.

Ladite ouverture 220 est équipée d'un rebord supplémentaire 223 s'étendant intérieurement en périphériquement en créant un rétrécissement par diminution de l'ouverture, à des fins non seulement de retenue du boîtier dans ledit compartiment mais également d'un entretoisement créateur d'un espace E entre le boîtier 100 et la paroi interne du pneumatique P. Selon le mode de réalisation préféré illustré, les rebords extérieur 221 et intérieur 223 sont préformés dans le réceptacle 200 en prolongement l'un de l'autre.

En effet, ledit boîtier 100 est préformé d'un orifice 110 faisant communiquer son volume intérieur avec le volume intérieur du pneumatique P. Conformément à l'invention, ledit boîtier 100 est orienté dans ledit compartiment d'accueil 210 du réceptacle 100 de sorte que son orifice 110 s'ouvre sur ledit espace E.

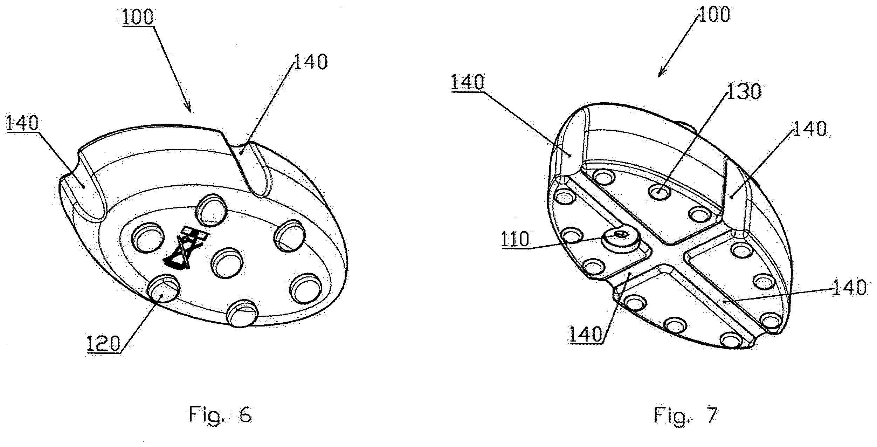

La paroi supérieure du compartiment 210 est percée d'une pluralité de trous circulaires 211 dans lesquels s'introduisent des projections verticales cylindriques 120 préformées sur la face supérieure du boîtier 100 à des fins de retenue comme illustrées sur les dessins des figures 3, 6 et 7.

Ledit boîtier est en outre préformé sur la périphérie de sa face inférieure d'autres projections verticales cylindriques 130 venant en appui sur le rebord interne 223 de l'ouverture 220 du compartiment d'accueil 210. Ainsi, le boîtier 100 n'est en contact avec la surface du réceptacle 200 collée au pneumatique qu'au moyen des extrémités de ces projections 130. Elles permettent en outre à l'air de circuler dans l'espace E, circulation illustrée par les flèches F.

Comme illustrée, pour faciliter cette circulation (flèche F), la face inférieure dudit boîtier 100 est préformée de gorges 140 disposées à angle droit et communiquant avec l'orifice 110 (le plan de coupe a été modifié pour faire entrer l'orifice). Ces gorges 140 se prolongent sur les côtés dudit boîtier 100 et viennent communiquer avec des orifices 212 pratiqués à cet effet dans les parois du compartiment 210. Selon un mode de réalisation non illustré, le boitier 100 est préformé de sorte que les gorges 140 se croisent au niveau de l'orifice 110.

Selon un mode de réalisation préféré mais non limitatif, le boîtier 100 est entièrement surmoulé dans une résine de type hot melt. Selon un mode de réalisation préféré mais non limitatif, ce boîtier présente une dureté Shore A allant de 60 à 80 et le réceptacle présente une dureté Shore A allant de 45 à 60.

La maintenance du boîtier peut être réalisée par déchirement de la paroi du compartiment. Selon un autre mode de réalisation non illustré, ledit réceptacle 200 est équipé d'un ouverture supérieure commandée par un velcro qu'il suffit de commander pour libérer le boîtier 100.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

## Revendications

1. Dispositif (D) de fixation à la paroi interne d'un pneumatique (P), d'un boîtier électronique (100) de mesure de paramètres à l'intérieur du pneumatique,
ledit boîtier (100) étant préformé d'un orifice (110) faisant communiquer son volume intérieur avec le volume intérieur du pneumatique (P),
le dispositif (D) comprenant ledit boîtier (100) et un réceptacle souple (200) qui venant se fixer à ladite paroi interne par un moyen d'adhésion (300), est préformé pour accueillir et retenir ledit boîtier (100),
ledit réceptacle souple (200) formant un compartiment (210) équipé d'une ouverture (220), par laquelle est introduit ledit boîtier (100) et qui est bordée par un rebord (221) s'étendant extérieurement et proposant une surface de contact (222) pour le moyen d'adhésion (300) de sorte qu'une fois le réceptacle (200) fixé, ladite ouverture (220) est fermée par la paroi interne sur laquelle le réceptacle (200) est fixé,
ladite ouverture (220) étant équipée d'un autre rebord (223) dit rebord interne qui, s'étendant intérieurement, crée un rétrécissement à des fins de retenue du boîtier (100) dans ledit compartiment (210) et un entretoisement définissant un espace (E) entre le boîtier (100) et la paroi interne du pneumatique (P),
**CARACTÉRISÉ PAR LE FAIT QUE** ledit boîtier (100) est orienté dans ledit compartiment (210) de sorte que son orifice (110) s'ouvre sur ledit espace (E), et ledit boîtier (100) et/ou ledit réceptacle (200) sont préformés de passages faisant communiquer l'espace (E) créé à l'intérieur du compartiment (210), et l'intérieur du pneumatique (P).

2. Dispositif (D) selon la revendication 1, **CARACTÉRISÉ PAR LE FAIT QUE** les parois du compartiment (210), sont percées par au moins un trou (211).

3. Dispositif (D) selon la revendication 2, **CARACTÉRISÉ PAR LE FAIT QUE** ledit boîtier (100) est préformé d'au moins une projection (120) venant coopérer avec ledit trou (211).

4. Dispositif (D) selon la revendication 1, **CARACTÉRISÉ PAR LE FAIT QUE** ledit boîtier (D) est préformé de projections (130) venant en appui sur le rebord interne (223) de l'ouverture (220) du compartiment.

5. Dispositif (D) selon la revendication 1, **CARACTÉRISÉ PAR LE FAIT QUE** ledit boîtier (100) est préformé extérieurement de gorges (140) avec lesquelles communique ledit orifice (110).

6. Dispositif (D) selon la revendication 5, **CARACTÉRISÉ PAR LE FAIT QUE** les parois du compartiment sont préformées d'orifices (212) communiquant avec lesdites gorges (140).

7. Dispositif (D) selon la revendication 1, **CARACTÉRISÉ PAR LE FAIT QUE** ledit boîtier (100) et ledit réceptacle (200) adoptent une forme oblongue et sont disposés sur la paroi interne de la bande de roulement du pneumatique de façon à ce que la plus grande longueur soit positionnée sur la largeur du pneumatique (P).

8. Dispositif (D) selon la revendication 1, **CARACTÉRISÉ PAR LE FAIT QUE** le boîtier (100) est réalisé par surmoulage de ses composants dans une résine.

## Patentansprüche

1. Vorrichtung (D) zum Befestigen an der Innenwand eines Reifens (P) eines elektronischen Gehäuses (100) zum Messen von Parametern im Inneren des Reifens,
wobei das Gehäuse (100) mit einer Öffnung (110) vorgeformt ist, die seinen Innenraum mit dem Innenraum des Reifens (P) kommunizieren lässt,
wobei die Vorrichtung (D) das Gehäuse (100) und eine biegsame Aufnahme (200) umfasst, die, indem sie sich an der Innenwand mit einem Haftmittel (300) befestigt, vorgeformt ist, um das Gehäuse (100) aufzunehmen und zurückzuhalten,
wobei die biegsame Aufnahme (200) ein Fach (210) bildet, das mit einer Öffnung (220) ausgestattet ist, durch die das Gehäuse (100) eingeführt wird, und die von einem Rand (221) umgeben ist, der sich außerhalb erstreckt und eine Kontaktoberfläche (222) für das Haftmittel (300) derart bietet, dass, sobald die Aufnahme (200) befestigt ist, die Öffnung (220) durch die Innenwand, auf der die Aufnahme (200) befestigt ist, verschlossen wird,
wobei die Öffnung (220) mit einem anderen Rand (223), Innenrand genannt, ausgestattet ist, der, indem er sich innen erstreckt, eine Verjüngung zum Zweck des Zurückhaltens des Gehäuses (100) in dem Fach (210) schafft, und einen Abstandhalter, der einen Raum (E) zwischen dem Gehäuse (100) und der Innenwand des Reifens (P) definiert,
**dadurch gekennzeichnet, dass** das Gehäuse (100) in dem Fach (210) derart ausgerichtet ist, dass sich seine Öffnung (110) auf den Raum (E) öffnet, und das Gehäuse (100) und/oder die Aufnahme (200) mit Passagen vorgeformt sind, die den Raum (E), der in dem Inneren des Fachs (210) geschaffen wird, und das Innere des Reifens (P) kommunizieren lassen.

2. Vorrichtung (D) nach Anspruch 1, **dadurch gekennzeichnet, dass** die Wände des Fachs (210) durch mindestens eine Bohrung (211) durchbohrt sind.

3. Vorrichtung (D) nach Anspruch 2, **dadurch gekennzeichnet, dass** das Gehäuse (100) mit mindestens einem Vorsprung (120) vorgeformt ist, der mit der Bohrung (211) zusammenwirkt.

4. Vorrichtung (D) nach Anspruch 1, **dadurch gekennzeichnet, dass** das Gehäuse (D) mit Vorsprüngen (130) vorgeformt ist, die auf dem Innenrand (223) der Öffnung (220) des Fachs zum Aufliegen kommen.

5. Vorrichtung (D) nach Anspruch 1, **dadurch gekennzeichnet, dass** das Gehäuse (100) außen mit Hohlkehlen (140) vorgeformt ist, mit welchen die Öffnung (110) kommuniziert.

6. Vorrichtung (D) nach Anspruch 5, **dadurch gekennzeichnet, dass** die Wände des Fachs mit Öffnungen (212), die mit den Hohlkehlen (140) kommunizieren, vorgeformt sind.

7. Vorrichtung (D) nach Anspruch 1, **dadurch gekennzeichnet, dass** das Gehäuse (100) und die Aufnahme (200) eine längliche Form annehmen und auf der Innenwand der Lauffläche des Reifens derart angeordnet sind, dass die größte Länge auf der Breite des Reifens (P) positioniert ist.

8. Vorrichtung (D) nach Anspruch 1, **dadurch gekennzeichnet, dass** das Gehäuse (100) durch Überformen seiner Bauteile in einem Harz hergestellt ist.

## Claims

1. Device (D) for fixing to the internal wall of a tyre (P), an electronic box (100) for measuring parameters inside the tyre,
said box (100) being preformed with an orifice (110) making its internal space communicate with the internal space of the tyre (P),
the device (D) comprising said box (100) and a flexible receptacle (200) that is fixed to said internal wall by adhesion means (300) is preformed to accept and retain said box (100),
said flexible receptacle (200) forming a compartment (210) equipped with an opening (220), through which said box (100) is introduced and which is bordered by an edge (221) extending externally and offering a contact surface (222) for the adhesion means (300), so that, once the receptacle (200) is fixed, said opening (220) is closed by the internal wall to which the receptacle (200) is fixed,
said opening (220) being equipped with another edge (223) referred to as the internal edge which, extending internally, creates a narrowing for the purpose of retaining the box (100) in said compartment (210) and a brace defining a space (E) between the box (100) and the internal wall of the tyre (P),
**characterised by** the fact that said box (100) is oriented in said compartment (210) so that its orifice (110) opens onto said space (E), and said box (100) and/or said receptacle (200) are preformed with passages making the space (E) created inside the compartment (210) communicate with the inside of the tyre (P).

2. Device (D) according to claim 1, **characterised by** the fact that the walls of the compartment (210) are pierced by at least one hole (211).

3. Device (D) according to claim 2, **characterised by** the fact that the box (100) is preformed with at least one projection (120) cooperating with said hole (211).

4. Device (D) according to claim 1, **characterised by** the fact that said box (D) is preformed with projections (130) coming into abutment on the internal edge (223) of the opening (220) in the compartment.

5. Device (D) according to claim 1, **characterised by** the fact that said box (100) is preformed externally with grooves (140) with which said orifice (110) communicates.

6. Device (D) according to claim 5, **characterised by** the fact that the walls of the compartment are preformed with orifices (212) communicating with said grooves (140).

7. Device (D) according to claim 1, **characterised by** the fact that said box (100) and said receptacle (200) adopt an oblong form and are disposed on the internal wall of the tread of the tyre so that the greatest length is positioned on the width of the tyre (P).

8. Device (D) according to claim 1, **characterised by** the fact that the box (100) is produced by overmoulding of its components in a resin.
